# EUROPEAN PATENT APPLICATION

(11) **EP 3 744 969 A1**
(43) Date of publication of application: **02.12.2020**
(21) Application number: 20176770.4
(22) Date of filing: 27.05.2020
(51) Int. Cl.: F03B 13/00

(54) **ENERGY HARVESTER, PRESSURE REDUCTION VALVE AND WATER METER**

(30) Priority: 28.05.2019 FI 20195448
(71) Applicant: Vuo Power Oy, 06530 Kerkkoo (FI)
(72) Inventor: Vuorio, Arttu, 06530 Kerkkoo (FI)
(74) Representative: Papula Oy

(57) **Abstract**

An energy harvester for generating electricity from a flow of fluid within a channel is disclosed. The energy harvester comprises two or more permanent magnets arranged to operate as a rotor, a turbine connected to the rotor, the turbine being rotatable by the flow of fluid to rotate the rotor, one or more bearings arranged to support the turbine and the rotor within the channel and a stator arranged outside the channel to be isolated from contact with the fluid, wherein the rotor and the stator are together arranged to generate electricity from the kinetic energy of the turbine when the turbine is rotated by the flow of fluid. Also, a pressure-reduction valve and a water meter are disclosed.

## Description

### FIELD

The present disclosure relates to an energy harvester. In particular, the disclosure relates to an energy harvester that can be used to generate electricity from a flow of fluid within a channel. The present disclosure also relates to a pressure reduction valve and a water meter.

### BACKGROUND

Energy harvesting is a process which allows energy to be captured from various different sources. While various different kinds of energy harvesters exist, key questions are whether the harvesters can operate autonomously and how effectively they can harvest energy from external sources. Energy harvesters can be used in various pipelines and therefore with various applications.

### OBJECTIVE

An objective is to provide an energy harvester that can be efficiently produce energy from fluid flow in one or more applications. Moreover, it is an objective to provide an energy harvester that can be used autonomously in applications or environments, where grid electricity is not available or not preferably used. Additionally, it is an objective to provide an energy harvester that can specifically be used to efficiently produce energy from liquid flow, in particular from water pipelines. Also, it is an objective to provide an energy harvester, which can efficiently measure the temperature of the fluid. It is also an objective to provide a pressure-reduction. Finally, it is an objective to provide a water meter.

### SUMMARY

According to a first aspect an energy harvester for generating electricity from a flow of fluid within a channel is disclosed. It may be adapted to provide electricity for powering one or more measurement and/or communication devices, for example at remote environments or without grid electricity. The fluid can be one or more of the following: a liquid, such as water, a gas, such as air, or a vapour, such as a process fume. The energy harvester may be specifically adapted for specific fluid flow, for example water flow or airflow. Correspondingly, the channel can typically be a pipe or a pipeline such as a water and/or air pipe but also an exhaust outlet for example of an airplane.

The energy harvester comprises two or more permanent magnets arranged to operate as a rotor and a turbine connected to the rotor, the turbine being rotatable by the flow of fluid to rotate the rotor. The energy harvester further comprises one or more bearings, for example one or more ball bearings and/or roller bearings, arranged to support the turbine and the rotor within the channel and a stator arranged outside the channel to be isolated from contact with the fluid. The one or more bearings can be arranged in various ways a person skilled in the art of bearing fitting can produce. As a bearing typically comprises a first part and a second part coupled to each other in such a way that the second part is arranged to rotate with respect to the first part, the second part can now be coupled to the turbine and the rotor, for example by a non-rotatable coupling, to arrange the turbine and the rotor rotatably coupled to the first part of the bearing. The first part, in turn, may be arranged to be coupled to a wall of the channel, indirectly or directly, to maintain the position of the bearing along the longitudinal axis of the channel. The first part may be arranged to be fixedly coupled to the wall of the channel to maintain the orientation of the first part with respect to the longitudinal axis of the channel when the flow of fluid is present in the channel. The energy harvester may comprise a bearing housing arranged to support the one or more bearings. As an example, the first part of the bearing for one or more of the one or more bearings may be arranged to be clamped within a bearing housing, rotatably or non-rotatably, to maintain the position of the bearing along the longitudinal axis of the channel. The one or more bearings, particularly a first part of the one or more bearings, and/or the bearing housing may be arranged to be connected to an incoming and/or an outgoing pipe so that the energy harvester can be installed between two separate sections of a channel, e.g. pipe sections. A first part of the one or more bearings and/or the bearing housing may be arranged to support the stator positioned outside the channel, for example on the outer surface of the first part and/or the bearing housing.

The rotor and the stator are together arranged to generate electricity from the kinetic energy of the turbine when the turbine is rotated by the flow of fluid. The rotation axis of the turbine can be parallel or substantially parallel with the longitudinal axis of the channel, which corresponds to the direction of flow of fluid within the channel. Correspondingly, cross-sectional dimension is defined in a plane perpendicular to the rotation axis, which can thereby be parallel or substantially parallel with a plane perpendicular to the longitudinal axis of the channel. The design of the energy harvester allows kinetic energy from the flow of fluid to be captured inside within the channel and used to generate electricity outside the channel at the stator. The electricity may then be stored or used immediately.

In an embodiment, the one or more bearings and the turbine comprise an opening positioned at the rotating axis of the turbine, the energy harvester being thereby arranged to direct the flow of fluid through the one or more bearings and the turbine along the rotation axis of the turbine. This allows the energy harvester to operate without excess disruption, such slowing down the flow or generating turbulence, since the flow of fluid can follow its natural flow path along the longitudinal axis of the channel. The design with an axial opening also allows the full flow path to be exploited for kinetic energy harvesting. The embodiment is particularly advantageous when the fluid is a liquid such as water, which may carry a relatively large amount of kinetic energy. The energy harvester can thereby efficiently reduce the flow by converting the kinetic energy of the flow into electricity. In a further embodiment, the cross-sectional size of the opening substantially corresponds to the cross-sectional size of the channel. This allows using the whole cross-sectional area of the channel, corresponding to the cross-sectional area of the pipe where the fluid flows, for the rotation of the turbine.

In an embodiment, the one or more bearings comprise a shaft arranged along the rotating axis of the turbine to support the turbine and the rotor within the channel. The embodiment is particularly advantageous when the fluid is a vapour or gas such as air, as it has been found to allow easier start-up for the energy harvester.

The energy harvester according to any of the preceding claims, wherein the stator is zero-cogging. The embodiment is particularly advantageous when the fluid is a vapour or gas such as air, where it has been found to significantly increase the coefficient of efficiency for the energy harvester. Zero-cogging can be achieved using a toothless stator.

In an embodiment, the energy harvester comprises two or more bearings arranged to support the turbine and the rotor within the channel. The two or more bearings are arranged at a distance from each other along the rotation axis of the turbine. This allows an improved rigidity for the turbine and the rotor, which in turn can significantly improve the service life of the energy harvester. This is particularly important when the energy harvester is used in hard to reach places, for example under autonomous operation in a remote environment.

In an embodiment, the turbine comprises one or more blades which are substantially oriented in parallel with the rotation axis of the turbine. This allows the turbine to follow the flow path of the fluid, allowing an improved control of the fluid-turbine interaction. The embodiment is particularly advantageous in conjunction with the abovementioned embodiment where the one or more bearings and the turbine comprise an opening since it allows the one or more blades of the turbine to be arranged around the opening, for example circumferentially so that the diameter of the circumference substantially corresponds to the diameter of the opening. In a further embodiment, the distal ends of the one or more blades comprise a bent to increase the rotation of the turbine from the flow of fluid. In the abovementioned embodiment where the one or more bearings and the turbine comprise an opening, the bent can be towards the rotation axis of the turbine.

In an embodiment, the two or more permanent magnets consists of an equal number of permanent magnets of opposite polarity and wherein the permanent magnets of opposite polarity are arranged alternately around the rotation axis of the turbine.

In an embodiment, the energy harvester comprises a battery arranged to store electricity generated by the rotor and the stator. This allows the energy harvester to function as a power bank and/or operate autonomously even when there is no sufficient flow of fluid.

In an embodiment, the stator is a single-phase stator or a three-phase stator.

In an embodiment, the energy harvester comprises one or more meters arranged to measure the amount and/or quality of the fluid flowing through the energy harvester. For example, a water quality meter allows water quality to be monitored by the energy harvester.

In an embodiment, the energy harvester comprises a transmitter, such as a wireless transmitter, arranged to transmit information from the energy harvester. This allows the energy harvester to transmit information about its status and/or measurement result from the one or more meters of the previous embodiment. The energy harvester may be arranged to transmit the information, for example, to a mobile device such as a mobile phone.

Additionally, it has been found that the energy harvester may also be arranged to measure the speed of fluid flow through the flow harvester and/or the temperature of the fluid. This may be done simultaneously with the electricity generation. When the temperature of the fluid changes, also the temperature of the permanent magnets changes. The permanent magnets may induce electromotive force to the stator, or to one or more stator coils. The electromotive force induced by the permanent magnets depends on the temperature of the permanent magnets, the frequency and the load for electricity generation. The frequency may herein also refer to the frequency of rotation of the rotor. The load may herein also refer to the current drawn from the electricity generation. The energy harvester may easily be arranged to measure the load and the frequency, by any ways known and available to a person skilled in the art, and consequently the energy harvester may be arranged to determine the temperature of the temperature of the permanent magnets, using the known load and known frequency. Since the energy harvester is arranged to be coupled to a pipeline so that the permanent magnets become immersed in the fluid, the energy harvester is also naturally arranged for the permanent magnets to assume the temperature of the fluid, allowing the temperature of the fluid to be equal or substantially equal to the temperature of the permanent magnets. When the load, the frequency, the properties of the fluid, such as water, and the properties of the turbine are known, the flow rate, such as water flow rate, can be straightforwardly determined. Herein, the flow rate may refer to any of the following alone or in any combination: the flow speed of the fluid, volumetric flow and mass flow.

In an embodiment, the energy harvester comprises a load meter and a frequency meter for measuring the rotation frequency of the rotor. This allows the energy harvester to provide measurement results, for example by a transmitter, that can be used to determine the temperature of the permanent magnets, when they are immersed in the fluid, and thereby the temperature of the fluid. In a further embodiment, the energy harvester is arranged to determine the temperature of the permanent magnets utilizing one or more first measurement values corresponding to a load measured by the load meter and one or more second measurement values corresponding to a frequency measured by the frequency meter. This allows the temperature reading to be provided already by and at the energy harvester, without remote processing.

According to a second aspect, a pressure-reduction valve is disclosed. The pressure-reduction valve can be made by a person skilled in the art by including the energy harvester of the first aspect or any combination of its embodiments. The pressure-reduction valve can thereby be arranged to reduce pressure from the flow of fluid, in particular liquid such as water, within the channel by generating electricity with the energy harvester. Such a pressure-reduction valve can be arranged to autonomously measure water consumption and/or quality, for example in residential buildings. It can also be arranged autonomously communicate the measured information to a user such as to a person living in the building or to the water utility.

According to a third aspect, a water meter comprises the energy harvester of the first aspect or any combination of its embodiments. The water meter is arranged to be powered, partially or fully, by the electricity generated by the energy harvester. This allows efficient flow metering from a water pipeline even in remote sources, where external power is scarce or unavailable altogether. Correspondingly, the fluid can be water or predominantly comprise water.

In an embodiment, the water meter is arranged to measure the flow of the fluid by monitoring the rotation of the turbine about the rotation axis. This may be done by monitoring the magnetic signal from the two or more permanent magnets. In an embodiment, the water meter is a remotely readable water meter. As the water meter can provide its own electricity, also for a transmitter for remote readability, the water meter can be self-sufficiently utilized even in locations where external power is scarce or absent and where the it is inconvenient to arrange the reading of the water meter.

It is noted that the energy harvester may also be arranged to generate electricity for fan and/or pump control. It may also be arranged to generate electricity for data transfer, for example wireless data transfer. A pump and/or fan control system and a wireless data transfer system may comprise the energy harvester, which is arranged to provide the electricity for partially or fully powering the corresponding system.

It is specifically noted that the energy harvester disclosed herein can be arranged as a low-energy harvester. It may be arranged to provide an output power ranging from 1 mW or 1 W to 50 W, for example. The output power may depend on various parameters such as the size of the channel and the type of fluid.

It is to be understood that the aspects and embodiments described above may be used in any combination with each other. Several of the aspects and embodiments may be combined together to form a further embodiment.

### BRIEF DESCRIPTION OF THE DRAWINGS

The accompanying drawings, which are included to provide a further understanding and constitute a part of this specification, illustrate embodiments and together with the description help to explain the principles of the invention. In the drawings:
**Fig. 1** illustrates an exploded view of an energy harvester according to an example,
**Fig. 2** illustrates an exploded view of an energy harvester according to another example, and
**Fig. 3** illustrates a view of an energy harvester according to yet another example.

Like references are used to designate equivalent or at least functionally equivalent parts in the accompanying drawings.

### DETAILED DESCRIPTION

The detailed description provided below in connection with the appended drawings is intended as a description of the embodiments and is not intended to represent the only forms in which the embodiment may be constructed or utilized. However, the same or equivalent functions and structures may be accomplished by different embodiments.

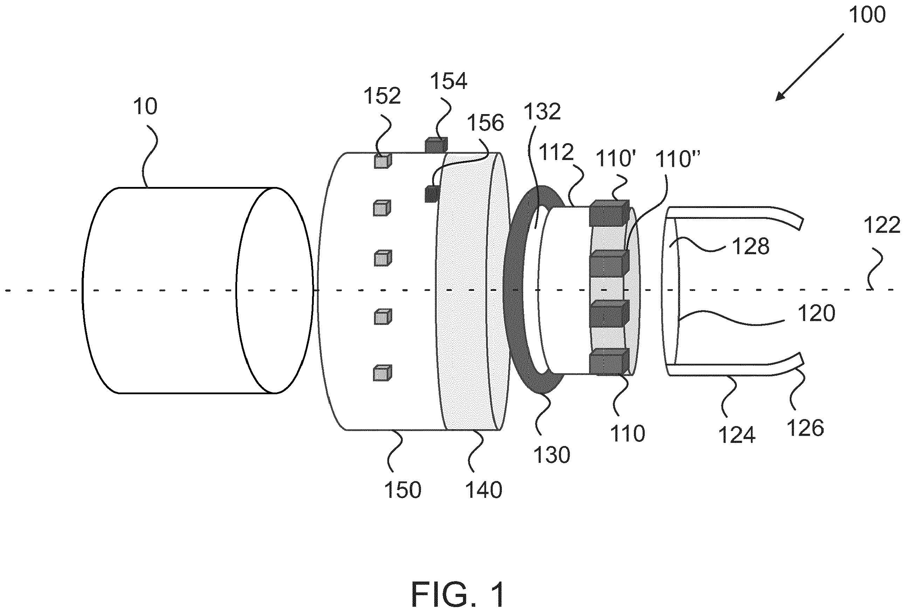

Figure 1 shows an example of an energy harvester 100, which can be arranged to generate electricity from the flow of various fluids but has particular advantages for relative dense fluids such as liquids, for example water. However, the features described below are applicable to all types of energy harvesters in accordance with the present disclosure. The fluid flows in a channel 10, such as a pipe, a supply line or an exhaust channel, which can be a cylindrical channel. The channel 10 may comprise an inlet channel, from which the fluid flows into the energy harvester 100, and/or and outlet channel, to which the fluid flows from the energy harvester 100. The energy harvester 100 may be arranged to be positioned within the channel 10 or it may be arranged as an extension of the channel 10, in which case it may comprise a frame 150 to be positioned at a mouth of the channel 10, i.e. at the inlet channel and/or at the outlet channel. The frame 150 may comprise one or two interfaces arranged for connecting to a channel 10 such as a pipe, allowing the frame 150 to be connected to an inlet channel and/or an outlet channel so that the fluid may flow from the inlet channel to the outlet channel through the energy harvester 100. The energy harvester 100 may be arranged for the flow direction of the fluid through the energy harvester 100 to be the same as the flow direction of the fluid in the inlet channel and/or the outlet channel. The inlet channel and the outlet channel may have the same diameter but they may also have different diameters, for example the outlet channel being larger than the inlet channel. The energy harvester 100 may be thereby arranged to have an input interface for flow of fluid that is the same size or different size with respect to an output interface for flow of fluid of the energy harvester 100, which can be used for example if the energy harvester 100 is included in a pressure-reduction valve.

The energy harvester 100 comprises a turbine 120, which is arranged to rotate around a rotation axis 122. The energy harvester 100 may be arranged for the rotation axis 122 to be parallel or substantially parallel with the longitudinal axis of the channel 10, such as a pipe, through which the fluid flows, when the energy harvester 100 is in use. Specifically, the energy harvester 100 may be arranged for the rotation axis 122 to be positioned substantially at the center of the channel. The energy harvester 100 may also be arranged for the rotation axis 122 to be positioned in any direction, for example substantially horizontally or substantially vertically. The design of the energy harvester 100 thus allows the device to function regardless of its orientation.

The energy harvester 100 comprises two or more permanent magnets 110 (hereafter also "the magnets"), which are arranged to operate as a rotor. For this purpose, the magnets 110 can be arranged circumferentially around the rotation axis 122. For example, the magnets 110 can be arranged substantially in a plane perpendicular to the rotation axis 122. The magnets 110 may be positioned, for example, on the turbine 120 but, additionally or alternatively, they may be positioned on a rotor frame 112, which may be connected to the turbine 120. The magnets 110 may be arranged, for example, on the outer surface of a rotor frame 112 and/or the outer surface of the turbine 120. The magnets 110 may comprise one or more magnets 110' of a first polarity, e.g. N polarity, and one or more magnets 110'' of second polarity, e.g. S polarity, wherein the second polarity is a polarity opposite to the first polarity. An improved stability and efficiency is obtained when the number of magnets 110' of the first polarity is equal to the number of magnets 110'' of the second polarity. The magnets 110' of first polarity may be arranged around the rotation axis 122 alternatingly with respect to the magnets 110'' of the second polarity.

The turbine 120 may comprise one or more blades 124, for example two, three or more blades. The one or more blades 124 may be oriented substantially in the plane perpendicular to the rotation axis 122. However, in an embodiment the one or more blades 124 may be oriented substantially in parallel with the rotation axis 122. The one or more blades 124 may comprise a section substantially in parallel with the rotation axis 122 and a bent 126 away from or towards the rotation axis 122, the bent 126 being arranged to increase the rotation of the turbine 120 from the flow of fluid. For example, the latter alternative can be used when the energy harvester 100 is arranged for the fluid to flow along the rotation axis 122, allowing the one or more blades 124 to surround the flow path of the fluid with the bent 126 increasing the efficiency of the turbine 120 (illustrated in Fig. 1).

The energy harvester 100 comprises one or more bearings 130 (hereafter also "the bearings"), which are arranged to support the turbine 120 and the rotor 110 within the channel 10 so that their position in the channel 10 can be maintained. The bearings 130 are arranged to allow the turbine 120 and the rotor 110 to rotate with respect to the channel 10. The bearings 130 may comprise one or more sleeve bearings and/or rolling bearings, for example one or more of a ball bearing, a roller bearing and a needle bearing. The bearings 130 can be arranged to be ultimately supported by the wall of the channel 10, for example the inner wall or the mouth of the channel 10. They may be arranged to be connected directly to the wall of the channel 10 or the energy harvester 100 may comprise a bearing housing which supports one or more of the bearings 130 and is, indirectly or directly, connected to the wall of the channel 10, which allows maintaining the position of the bearing housing and the one or more of the bearings 130 with respect to the channel. The bearing housing may constitute or be part of the frame 150 of the energy harvester 100. In an example, one or more of the bearings 130 is clamped, at least partially, within a bearing housing. The bearing housing may further house the rotor 110 and/or the turbine 120 or, alternatively, the rotor 110 and/or the turbine 120 may extend outside the bearing housing. The bearing housing may comprise means for opening and closing the bearing housing, for example a quick-release fastener or a threaded connection. Since the frame 150 or the bearing housing provide and extension to the channel 10, they can be dimensioned larger than the channel 10. This allows the energy harvester 100 to be define an extension for the channel 10 within the energy harvester having an equal diameter with the channel 10, in particular the input channel, outside the energy harvester 100, while the outer diameter of the energy harvester 100 may be equal or larger than the diameter of the channel 10. Similarly, the diameter of one or more of the bearing housing, the bearings 130, the rotor 110 or the turbine can be the same or larger than the diameter of the channel 10, in particular the inlet channel.

The energy harvester 100 comprises a stator 140, which is arranged in a fluid-proof manner outside the channel 10, for example on the frame 150 of the energy harvester 100 or on the bearing housing. This way, the fluid cannot become in contact with the stator 140. The stator 140 may be positioned substantially on the rotor 110 along the longitudinal dimension of the energy harvester, i.e. along the dimension defined by the rotation axis 122. The stator 140 may comprise one or more stator coils, which may be wound around the channel 10. The stator 140 may be, for example, a single-phase stator or a three-phase stator. The stator 140 typically comprises a stator core, which may be made of metal such as iron. The stator core may comprise a plurality of teeth arranged to generate a cogging torque or it may be toothless and thereby arranged to provide zero-cogging for the stator 140. The stator core may be arranged to extend circumferentially around the channel 10, optionally without interruptions.

The rotor 110 and the stator 140 are together arranged to generate electricity from the kinetic energy of the turbine 120 when the turbine 120 is rotated by the flow of fluid through the energy harvester 100. The flow of fluid forces the turbine 120 to rotate so that the permanent magnets 110 rotate and create a variable magnetic field. Variable magnetic field inducts an ac voltage to the stator 140, e.g. to the one or more stator coils, which are positioned outside of the channel 10. The stator 140 may be arranged with cogging torque to increase efficiency of the generator. The stator 140 is mounted outside of the pipeline or channel to avoid any contacts with the flowing fluids. As the electricity is created outside the flow of fluid, this allows increased security for the energy harvester 100. A voltage generated at the stator 140 can be directed to a rectifier for conversion to dc current. The energy harvester 100 may be arranged to use the dc current to charge the battery.

In an embodiment, the bearings 130 and the turbine 120 comprise an opening 128, 132 positioned at the rotating axis 122. The energy harvester 100 is thereby arranged to form a fluid flow path through the energy harvester 100 along the rotating axis 122. All incoming fluid to the energy harvester 100, or all the incoming fluid in the channel 10, can thereby be directed through the opening 128, 132. The diameter of the opening 128, 132 may substantially comprise the diameter of the channel 10, in particular the inlet channel, so as to utilize the full capacity of the channel 10 for the turbine 120. The opening 128, 132 may be circular or substantially circular, allowing the flow through the energy harvester 100 to be optimized. The fluid is able to flow through the whole area of the channel 10, corresponding to the whole area of a pipe or a pipeline, without disturbing the rotor 110 and turbine 120, or the bearings 130, inside the channel 10.

The energy harvester 100 may comprise a battery arranged to store the electricity generated by the rotor 110 and the stator 140. The battery is electrically, and optionally also mechanically, connected to the stator 140. The battery may be arranged at the frame 150 or at the bearing housing. Similarly, the energy harvester 100 may comprise one or more additional components 152, 154, 156, which may be arranged, for example, at the frame 150 or at the bearing housing. Such components may include, but are not limited to, any combination of the following: one or more electric output connections, which may comprise one or more plug-in contacts for electric devices 152, a rectifier 154 and a load controller 156. The load controller 156 may be arranged to drop pressure in the flow of fluid, for example by directing the pressure and/or a change in pressure across the turbine 120 towards a target value. Particularly in water flow applications, the load controller 156 may be arranged to facilitate the conversion of pressure reduction of water at the energy harvester 100 to heat a boiler by electrical resistance. In any application, but particularly when the liquid is a fluid such as water, the energy harvester 100 may be arranged, with the load controller 156 and the turbine 120, to reduce the flow of fluid across the turbine 120.

The energy harvester 100 may comprise one or more meters arranged to measuring properties of the flow, which may be positioned upstream and/or downstream with respect to the turbine 120. Alternatively or additionally, the energy harvester 100 may be arranged to receive measurement results and/or control instructions from one or more external sources. For this purpose, the energy harvester 100 may comprise a receiver, which may be part of a transmitter-receiver. Similarly, the energy harvester 100 may comprise a transmitter, which may be part of a transmitter-receiver, arranged to transmit information from the energy harvester 100, for example status information of the energy harvester 100 and/or measurement information. The energy harvester 100 may comprise one or more of the following: a pressure meter, a fluid quality meter, a volume and/or mass flow meter.

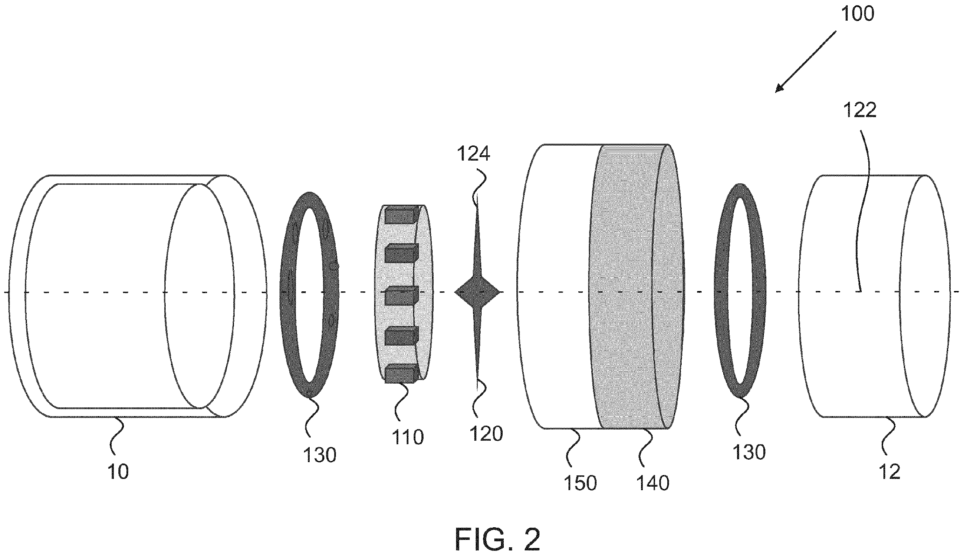

Figure 2 shows an example of an energy harvester 100 in an exploded view. In this example, both an inlet channel 10 and an outlet channel 12 are illustrated, although it should be understood that their relative order can be as pictured or opposite. Also, the inlet channel 10 may have the same or larger diameter than the outlet channel 12 or vice versa.

It is also illustrated that the energy harvester 100 may comprise two or more bearings 130, one or more or all of which may correspond to the bearings 130 described hereinbefore. Using two bearings has been found in the disclosed energy harvester 100 to allow significantly improved support of the rotor 110 and the turbine 120, improving the service life of the energy harvester 100. Two of the bearings 130 may be arranged along the rotation axis 122, for example, on opposite sides of a wall of a bearing housing, where they may both be supported against the wall of the bearing housing. Alternatively or additionally, two of the bearings 130 may be arranged along the rotation axis 122 on opposite sides of the rotor 110 and/or the turbine 120 to significantly increase the support for the rotor 110 and/or the turbine 120.

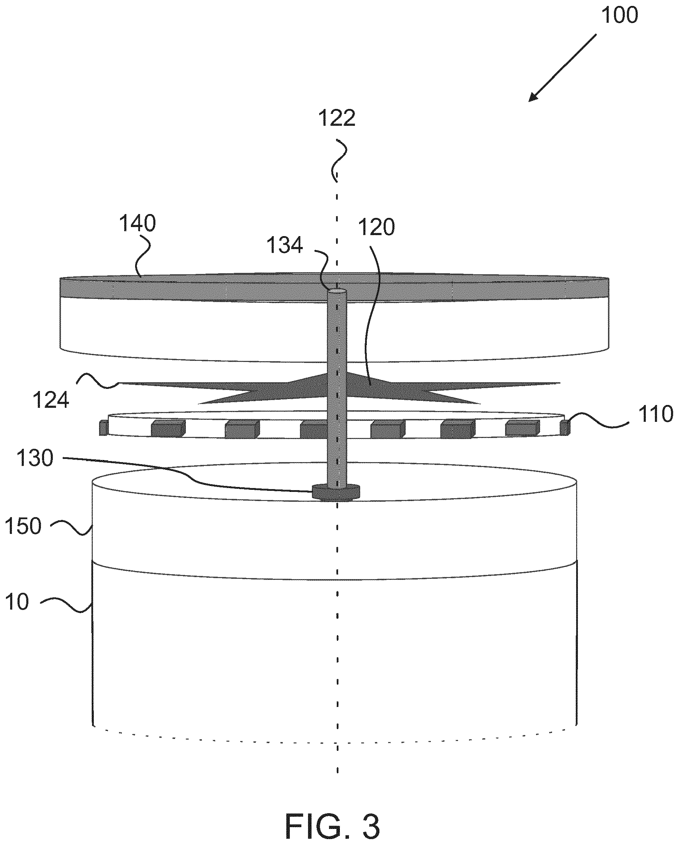

Figure 3 shows a view of an energy harvester 100 according to yet another example. The illustrated energy harvester 100 can be arranged to generate electricity from the flow of various fluids but has particular advantages for fluids of relative low density such as gases or vapours, for example air. However, the features described below are applicable to all types of energy harvesters in accordance with the present disclosure.

The energy harvester 100 may comprise a shaft 132, which may be arranged as part of the bearings 130. The shaft 132 can be arranged along the rotating axis 122 to support the turbine 120 and the rotor 110 within the channel 10. Again, the bearings 130 may be indirectly or directly coupled to a wall of the channel 10, for example through a frame 150 or a bearing housing. The stator 140 may be zero-cogging, which has particular effect when the fluid is a gas or a vapour, for example air, as it has been found to allow help the rotational function of the rotor 110. This in turn, has been found to improve the start-up for the energy harvester 100, particularly in gas or vapour flow application such as when the fluid is or significantly has the dynamics of air. To minimize the cogging torque, the stator 140 may have a smooth inner surface. For zero-cogging the stator 140 may be toothless. The stator core of the stator 140 may be arranged to be smooth so that the magnets 110 interact with the core uniformly under rotation. The turbine 120 may comprise one or more blades 124, which may be arranged to create a pressure field that minimizes the disruption to the flow of fluid in the channel 10.

There are various applications, where the energy harvester 100 in accordance with the present disclosure may be used. In addition to what is mentioned hereinbefore, this includes at least an elevated installation at a telecommunication mast. Heat produced by one or more telecommunication devices located in the vicinity of the mast can be directed to the top of the mast through a gravity ventilation channel. This allows the energy harvester 100 to produce electricity power from the waste heat and wind. The energy harvester 100 may be arranged for positioning at out-of-grid locations where one or more devices need electricity to function. For example sensors, flow measurement, flow quality indicators, data communication, and pressure reduction valves can use the electricity generated by the energy harvester 100 to function. Moreover, the energy harvester 100 can be integrated in one or more of said devices - particularly to a flow measurement sensor or to a pressure-reduction valve. In many locations, distance to electric grid can be many kilometers and the conventional solution is to use a battery, which has to be recharged or removed. Air-flow applications include but are not limited to any combination of the following: measurement of the flow, temperature, flowing air quality, used and generated power; control of the measurement data for devices that control the flowing air; purify air by electrostatic purification methods; offering of data of functioning of a low-power wide-area network to an end user; lighting for service and surveillance using e.g. LED lighting; offering power for security devices and/or fire extinguishers; and power charging for one or more devices.

As an example, in an energy harvester 100 the turbine 120 may be a vertical axis wind turbine (VAWT) arranged to rotate under wind or air flow. The energy harvester 100 further be arranged to generate electricity from waste heat.

In addition, a water meter is disclosed. The water meter comprises the energy harvester 100. The energy harvester 100 provides the electricity for partially or fully powering the water meter. The water meter has an inflow and an outflow connection to a water pipeline, for example to water main. The inflow and/or outflow connection may be a threaded connection for screwable coupling of the water meter to a pipeline. The pipeline may be that of a public water supply system. The water meter may have a fluid flow path for metering, which path corresponds to the fluid flow path of the energy harvester 100 for generating electricity, i.e. through the opening 128, 132 and through one or more bearings 130 as disclosed above.

The water meter can be arranged to measure the flow of water, such as volume flow. In particular, the water meter may be arranged to measure the flow by determining the amount of rotation of the turbine 120 about the rotation axis 122. The water meter can thereby be a turbine water meter, where the turbine 120 of the energy harvester 100 acts as the turbine of the turbine water meter. For this purpose, the water meter may be arranged to monitor the magnetic signal from the two or more permanent magnets 110. The rotation of the permanent magnets 110 thereby provides an effective way of determining the rotation of the turbine 120. The water meter can be thus a turbine water meter and/or a magnetic flow meter. On the other hand, the water meter may also be an ultrasonic water meter. The water meter may comprise a counter for monitoring the rotation of the turbine 120 about the rotation axis 122, for example arranged to determine the number or frequency of rotations about the rotation axis 122. Alternative or in addition, any way known to a person skilled in the art for determining the flow, such as the volumetric flow, of fluid, such as water, from rotation of a turbine may be used.

The water meter may comprise a transmitter for transmitting information about the measured water flow. The transmitter may be a wireless transmitter, such as a radio frequency transmitter. The energy harvester 100 may be arranged to partially or fully power the transmitter. The transmitter may be the transmitter referred in any parts of this disclosure. The water meter can thereby be a remotely readable water meter. The water meter may also comprise a battery for powering the water meter. The battery may be that of the energy harvester 100. The energy harvester 100 may be electrically connected to the battery for charging the battery. This allows the water meter to be partially or fully powered by the electricity generated by the energy harvester even when flow of water is weak or absent. The energy harvester 100 may charge the battery whenever the fluid flows through it. In general, the energy harvester 100 may comprise a load meter for measuring the load, or the current, from electricity generation. It may also comprise a frequency meter for measuring the rotation frequency of the rotor 110 about the rotation axis 122. When the energy harvester 100 comprises both the load meter and the frequency meter, which may be provided as separate from each other or as integrated to each other, these may be used to arrange the energy harvester 100 to determine the temperature of the permanent magnets 110 and, as such, the temperature of the fluid, such as water.

The different functions discussed herein may be performed in a different order and/or concurrently with each other.

Any range or device value given herein may be extended or altered without losing the effect sought, unless indicated otherwise. Also any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

## Claims

1. An energy harvester for generating electricity from a flow of fluid within a channel, the energy harvester comprising:
two or more permanent magnets arranged to operate as a rotor;
a turbine connected to the rotor, the turbine being rotatable by the flow of fluid to rotate the rotor;
one or more bearings arranged to support the turbine and the rotor within the channel; and
a stator arranged outside the channel to be isolated from contact with the fluid; wherein the rotor and the stator are together arranged to generate electricity from the kinetic energy of the turbine when the turbine is rotated by the flow of fluid;
wherein the one or more bearings and the turbine comprise an opening positioned at the rotating axis of the turbine, the energy harvester being thereby arranged to direct the flow of fluid through the one or more bearings and the turbine along the rotation axis of the turbine.

2. The energy harvester according to claim 1, wherein the cross-sectional size of the opening substantially corresponds to the cross-sectional size of the channel.

3. The energy harvester according to any of the preceding claims, wherein the stator is zero-cogging.

4. The energy harvester according to any of the preceding claims, comprising two or more bearings arranged to support the turbine and the rotor within the channel; the two or more bearings arranged at a distance from each other along the rotation axis of the turbine.

5. The energy harvester according to any of the preceding claims, wherein the turbine comprises one or more blades which are substantially oriented in parallel with the rotation axis of the turbine.

6. The energy harvester according to claim 5, wherein the distal ends of the one or more blades comprise a bent to increase the rotation of the turbine from the flow of fluid.

7. The energy harvester according to any of the preceding claims, wherein the two or more permanent magnets consists of an equal number of permanent magnets of opposite polarity and wherein the permanent magnets of opposite polarity are arranged alternately around the rotation axis of the turbine.

8. The energy harvester according to any of the preceding claims, comprising a battery arranged to store electricity generated by the rotor and the stator.

9. The energy harvester according to any of the preceding claims, wherein the stator is a single-phase stator or a three-phase stator.

10. The energy harvester according to any of the preceding claims, comprising one or more meters arranged to measure the amount and/or quality of the fluid flowing through the energy harvester.

11. The energy harvester according to any of the preceding claims, comprising a transmitter arranged to transmit information from the energy harvester.

12. The energy harvester according to any of the preceding claims, comprising a load meter and a frequency meter for measuring the rotation frequency of the rotor.

13. A pressure-reduction valve comprising the energy harvester of any of the preceding claims.

14. A water meter comprising the energy harvester of any of the preceding claims, wherein the water meter is arranged to be powered by the electricity generated by the energy harvester.

15. The water meter according to claim 14, wherein the water meter is arranged to measure the flow of water by monitoring the rotation of the turbine about the rotation axis.
